# EUROPÄISCHE PATENTSCHRIFT

(11) **EP 3 064 910 B1**
(45) Veröffentlichungstag und Bekanntmachung des Hinweises auf die Patenterteilung: **06.05.2020**
(21) Anmeldenummer: 15157852.3
(22) Anmeldetag: 05.03.2015
(51) Int. Cl.: G01F 23/288, G01N 9/24, G01T 1/20

(54) **Radiometrischer Detektor zur Erfassung einer Messgröße**
Radiometric detector for detecting a variable
Détecteur radiométrique destiné à la détection d'une grandeur de mesure

(43) Veröffentlichungstag der Anmeldung: 07.09.2016
(73) Patentinhaber: Berthold Technologies GmbH & Co. KG, 75323 Bad Wildbad (DE)
(72) Erfinder: Freiburger, Ewald, 75245 Neulingen (DE); Mörmann, Dirk, 76476 Bischweier (DE); Müller, Steffen, 75173 Pforzheim (DE); Daibenzeiher, Tobias, 75305 Neuenbürg (DE)
(74) Vertreter: Patentanwälte Ruff, Wilhelm, Beier, Dauster & Partner mbB

(56) Entgegenhaltungen:
- EP-A1- 2 194 362
- EP-A1- 2 378 312
- DE-A1- 10 132 267
- DE-A1-102004 007 680

## Beschreibung

Die Erfindung bezieht sich auf einen radiometrischen Detektor zur Erfassung einer Messgröße.

In der Prozessmesstechnik werden zur Messung einer Messgröße oder Prozessgröße wie einem Füllstand, einer Feuchtigkeit, einer Dichte, einem Massenstrom etc., radiometrische Messsysteme verwendet, die Szintillationsdetektoren zur Strahlungsmessung umfassen. Die Szintillationsdetektoren dienen beispielsweise zur Bestimmung der Energie und/oder der Intensität von ionisierender Strahlung, wobei die Energie und/oder die Intensität der ionisierenden Strahlung von der Messgröße abhängt/abhängen.

Aus der EP 2 194 362 A1 ist ein radiometrisches Füllstands- oder Dichtemesssystem zur Bestimmung eines Füllstands oder einer Dichte eines Mediums bekannt. Das Messsystem weist einen Szintillator, mehrere Photodioden, eine Summationseinrichtung und eine Auswerteeinheit auf. Der Szintillator dient zum Umwandeln von ionisierender erster Strahlung, die das Medium durchstrahlt, in elektromagnetische zweite Strahlung. Die mehreren Photodioden dienen zum Umwandeln der zweiten Strahlung in Spannungspulse. Die Summationseinrichtung dient zum Aufsummieren von Spannungspulsen oder von digitalen Signalen, die aus den Spannungspulsen erzeugt wurden, wobei die Spannungspulse zur selben Zeit entstanden sind, und zur Ausgabe eines korrespondierenden Summensignals. Die Auswerteeinheit dient zum Bestimmen des Füllstands oder der Dichte des Mediums auf Basis einer Anzahl an erzeugten Spannungspulsen. Dabei ist die Auswerteeinheit zum Zählen nur der Summensignale ausgeführt, welche eine vorbestimmte Mindestimpulsstärke oder eine vorbestimmte Mindestanzahl an digitalen Signalen aufweisen. Die restlichen Summensignale werden als Rauschsignale verworfen. Die Kombination mehrerer Photodioden erlaubt es, Dunkelpulse der Photodioden zu unterdrücken sowie die Empfindlichkeit des Systems zu erhöhen.

Des Weiteren ist aus der DE 10 2004 007 680 A1 ein radiometrisches Messgerät bekannt.

Neben einer genauen Messung der Messgröße ist in der Prozessmesstechnik eine hohe Verfügbarkeit der Messung wichtig. Der Ausfall einer Messung kann zu erheblichen Kosten für den Betreiber führen, insbesondere können in sicherheitskritischen Anlagen Sach- und Personenschäden die Folge sein.

Der Erfindung liegt als Aufgabe die Bereitstellung eines radiometrischen Detektors zur Erfassung einer Messgröße zugrunde, der besonders ausfallsicher bei gleichzeitig einfachem Aufbau ist.

Die Erfindung löst diese Aufgabe durch die Bereitstellung eines radiometrischen Detektors mit den Merkmalen des Anspruchs 1.

Der erfindungsgemäße radiometrische Detektor zur Erfassung einer Messgröße weist einen Szintillator zur Erzeugung von Lichtimpulsen in Abhängigkeit von einem Einfall ionisierender Strahlung auf, wobei der Strahlungseinfall von der Messgröße abhängt. Im Detail wird der Szintillator des radiometrischen Detektors beim Durchgang von ionisierender Strahlung angeregt und gibt die Anregungsenergie in Form von Lichtimpulsen wieder ab. Insbesondere kann der Szintillator ein Szintillationskristall sein.

Des Weiteren weist der radiometrische Detektor eine Mehrzahl optoelektronischer Sensoren auf, wobei ein jeweiliger optoelektronischer Sensor dazu ausgebildet ist, die von dem Szintillator erzeugten Lichtimpulse in ein zugehöriges elektrisches Sensorsignal umzuwandeln. Somit wird eine Mehrzahl von Sensorsignalen erzeugt. Die Sensorsignale der optoelektronischen Sensoren sind zeitlich korreliert, da sich das im Szintillator erzeugte Szintillationslicht über alle

(oder zumindest eine Vielzahl) der optoelektronischen Sensoren verteilt. Die Mehrzahl der optoelektronischen Sensoren ist optisch an den Szintillator gekoppelt, insbesondere können die optoelektronischen Sensoren auf den Szintillator aufgebracht sein. Die optoelektronischen Sensoren können jeweils eine eigene Ausleseelektronik aufweisen, wobei die elektrischen Sensorsignale jeweils in einer der Ausleseelektroniken geformt und verstärkt werden. Insbesondere können die optoelektronischen Sensoren Photomultiplier (Elektronenröhren), Photodioden oder Silizium-Photomultiplier (SiPM) sein.

Außerdem weist der radiometrische Detektor eine Auswerteeinheit auf, wobei die Auswerteeinheit mit den jeweiligen Sensorsignalen der Mehrzahl optoelektronischer Sensoren beaufschlagt ist. Die Auswerteeinheit weist ein Bewertungsteil und ein Summationsteil auf. Das Bewertungsteil ist dazu ausgebildet, ein jeweiliges Sensorsignal der Mehrzahl von Sensorsignalen als fehlerfreies oder fehlerhaftes Sensorsignal zu bewerten. Typischerweise verursacht ein möglicher Fehler oder Ausfall eines der optoelektronischen Sensoren ein entsprechend fehlerhaftes Sensorsignal. Somit kann das Bewertungsteil durch die Bewertung der jeweiligen Sensorsignale einen möglichen Fehler oder Ausfall eines der optoelektronischen Sensoren erkennen.

Erfindungsgemäß ist das Summationsteil dazu ausgebildet, ein Summensensorsignal nur aus den fehlerfreien Sensorsignalen zur Gewinnung eines Messgrößensignals für die Messgröße zu bilden. Somit werden die einzelnen Sensorsignale parallel ausgewertet. Im schlimmsten Fall sind alle Sensorsignale als fehlerhafte Sensorsignale bewertet. Dann wird kein Summensensorsignal gebildet. Ist der radiometrische Detektor voll funktionsfähig, d.h. keiner der optoelektronischen Sensoren ist fehlerhaft oder ausgefallen und alle Sensorsignale sind als fehlerfreie Sensorsignale bewertet, erhält man das beste Signal-Rausch-Verhältnis (S/N) durch Addieren der zeitlich korrelierten analogen Sensorsignale. Dies ist damit zu erklären, dass die Sensorsignale zeitlich korreliert sind (Gamma-Ereignis im Szintillator), ein Rauschen in jedem der einzelnen optoelektronischen Sensoren jedoch zeitlich unabhängig von den anderen Sensoren ist. Somit werden die Sensorsignale so verarbeitet, dass deutliche Vorteile und schlimmstenfalls keine Einbußen im Signal-Rausch-Verhältnis gegenüber einem Ein-Sensor Messsystem gegeben sind, d.h. messtechnisch keine Nachteile vorhanden sind.

Die optoelektronischen Sensoren sind somit intern redundant ausgeführt. Typischerweise haben diese gegenüber den anderen Komponenten des radiometrischen Detektors eine höhere Ausfallwahrscheinlichkeit. Des Weiteren kann eine Spannungsversorgung der optoelektronischen Sensoren redundant und unabhängig aufgebaut sein. Der Szintillator hat bei geeigneter mechanischer Kapselung eine sehr geringe Ausfallwahrscheinlichkeit. Somit kann der radiometrische Detektor auch bei Ein- oder Mehr-Sensoren-Ausfällen noch ein zuverlässiges Summensensorsignal bzw. eine zuverlässige Messgröße ermitteln. Dies erhöht die Verfügbarkeit und Verlässlichkeit des radiometrischen Detektors bzw. der Messung und verbessert die Kennzahlen im Rahmen einer Funktionalen Sicherheits-Betrachtung nach SIL (Sicherheits-Integritätslevel). Da dies in einem einzigen radiometrischen Detektor erfolgt, statt durch den Betrieb mehrerer radiometrischer Messsysteme, führt dies zu einer signifikanten Einsparung für einen Kunden bei einer Beschaffung, einer Installation, einem Betrieb und einer Wartung des radiometrischen Detektors. Des Weiteren ist der erfindungsgemäße radiometrische Detektor gegenüber mehreren radiometrischen Messsystemen platzsparend. Dies ist in vielen Anwendungen vorteilhaft, wie in Stahlwerken beim Stranggießen, bei denen der benötigte Platz und die notwendige Energieversorgung ebenfalls ein limitierender Faktor sind. Die Problematik eines redundanten radiometrischen Detektors ist einen Kompromiss zwischen Granularität (Grad der Redundanz) sowie dem besten Signalverhalten (Bildung der analogen Summe für höchste S/N) zu finden. Die hier vorgestellte Detektorarchitektur ermöglicht beides in vollem Umfang. Des Weiteren ist durch die Verwendung eines einzelnen Szintillators dies eine besonders kostengünstigste Variante.

Alternativ kann der erfindungsgemäße radiometrische Detektor eine Mehrzahl benachbart angeordneter Szintillatoren aufweisen, wobei an jeden Szintillator mindestens ein optoelektronischer Sensor optisch gekoppelt ist. Ein jeder der Mehrzahl der Szintillatoren mit dem mindestens einen optoelektronischen Sensor kann als ein Szintillationsmodul bezeichnet werden. Mehrere dieser voneinander unabhängigen Szintillationsmodule werden möglichst dicht gepackt angeordnet.

Wie oben beschrieben, ist auch in dieser Variante das Bewertungsteil dazu ausgebildet, ein jeweiliges Sensorsignal der Mehrzahl von Sensorsignalen als fehlerfreies oder fehlerhaftes Sensorsignal zu bewerten. Das Summationsteil ist in diesem Fall dazu ausgebildet, jeweils Einzelsummensensorsignale nur aus den fehlerfreien analogen Sensorsignalen der einzelnen Szintillationsmodule zu bilden und aus den Einzelsummensensorsignalen oder aus diesen weiterverarbeiteten Signalen ein Summensensorsignal zur Gewinnung eines Messgrößensignals für die Messgröße zu bilden. Durch eine optische Trennung der Szintillationsmodule voneinander, ist nur bei Compton-Streuung eine zeitliche Korrelation der analogen Sensorsignale von optoelektronischen Sensoren zweier verschiedener Module zu erwarten. Das erzeugte Szintillationslicht bzw. der erzeugte Lichtimpuls bleibt innerhalb eines Szintillators und wird von dem mindestens einen optoelektronischen Sensor aufgefangen. Zeitlich nicht korrelierte Sensorsignale, dürfen nicht analog addiert werden, da sich sonst das S/N verschlechtern würde. Alle Sensorsignale bzw. Einzelsummensensorsignale sind - mindestens im zeitlichen Mittel - linear miteinander verknüpft, wenn der radiometrische Detektor homogen bestrahlt wird.

Die Verwendung mehrerer einzelner Szintillatoren macht diese Variante zwar teurer, erhöht aber andererseits die Verlässlichkeit des radiometrischen Detektors, da z.B. ein Szintillatorbruch nur ein einzelnes Szintillationsmodul und die entsprechenden Sensorsignale betrifft.

In einer Weiterbildung der Erfindung sind der Szintillator, die Mehrzahl optoelektronischer Sensoren und die Auswerteeinheit in einem gemeinsamen Gehäuse angeordnet. Ein Kunde bzw. ein Anwender bekommt somit ein einzelnes Gerät bzw. einen einzelnen Gegenstand.

In einer Weiterbildung der Erfindung weist das Bewertungsteil eine Auswahllogik (Englisch: voting logic), wie eine 1002 Auswahllogik, auf, wobei die Auswahllogik dazu ausgebildet ist, ein jeweiliges Sensorsignal der Mehrzahl von Sensorsignalen als fehlerfreies oder fehlerhaftes Sensorsignal zu bewerten. Eine Auswahllogik erkennt Fehler oder Ausfälle besonders gut und schnell.

In einer Ausgestaltung der Erfindung weist die Mehrzahl optoelektronischer Sensoren mindestens drei optoelektronische Sensoren auf und die Auswahllogik ist dazu ausgebildet, die Mehrzahl der Sensorsignale miteinander zu vergleichen und in Abhängigkeit von einem Vergleichsergebnis ein jeweiliges Sensorsignal der Mehrzahl von Sensorsignalen als fehlerfreies oder fehlerhaftes Sensorsignal zu bewerten. Insbesondere kann es sich um eine 2003 Auswahllogik handeln. Ist der radiometrische Detektor voll funktionsfähig, d.h. keiner der optoelektronischen Sensoren ist fehlerhaft oder ausgefallen, sind alle Sensorsignale - mindestens im zeitlichen Mittel, z.B. über 60 Sekunden - linear miteinander verknüpft, wenn der Detektor homogen bestrahlt wird. Fällt z.B. der Füllstand in einem Behälter ab, so müssen alle (mittleren) Sensorsignale um den gleichen Faktor ansteigen. Ist dies nicht der Fall und werden Abweichungen, z.B. mehr als 10%, eines optoelektronischen Sensors von den anderen optoelektronischen Sensoren durch Vergleich der Sensorsignale untereinander festgestellt, deutet dies auf ein Fehlverhalten oder einen Ausfall des entsprechenden Sensors oder des entsprechenden Szintillators hin. Das entsprechende Sensorsignal wird dann als fehlerhaftes Sensorsignal bewertet.

In einer Weiterbildung der Erfindung weist das Summationsteil ein Schaltelement und ein Summationselement auf. Das Schaltelement steht mit dem Bewertungsteil in Signalverbindung und ist dazu ausgebildet, ein jeweiliges fehlerfreies Sensorsignal weiterzuleiten und ein jeweiliges fehlerhaftes Sensorsignal nicht weiterzuleiten. Eine Weiterleitung oder eine Nichtweiterleitung eines jeweiligen Sensorsignals kann durch entsprechende Schaltzustände von Schaltern des Schaltelementes in Abhängigkeit von der Bewertung des Bewertungsteils erfolgen. Dies erlaubt es ein fehlerhaftes Sensorsignal von der Summensensorsignalbildung auszublenden. Das Summationselement ist dazu ausgebildet, das Summensensorsignal aus den von dem Schaltelement weitergeleiteten fehlerfreien Sensorsignalen zu bilden. Alternativ oder zusätzlich zu dem Schaltelement kann das Summationsteil einen Korrelator zur Signalverarbeitung aufweisen.

In einer Weiterbildung der Erfindung weist die Auswerteeinheit einen Komparator und einen Zähler auf. Der Komparator ist dazu ausgebildet, das Summensensorsignal oder ein aus dem Summensensorsignal weiterverarbeitetes Signal mit einem Messschwellenwert zu vergleichen und in Abhängigkeit von einem Vergleichsergebnis ein Ausgabesignal zu erzeugen. Der Komparator analysiert das Summensensorsignal oder das aus dem Summensensorsignal weiterverarbeitete Signal in seiner Höhe. Überschreitet die Signalhöhe den Messschwellenwert, wird das Ausgabesignal erzeugt. Der Zähler ist dazu ausgebildet, das Ausgabesignal zu registrieren und ein Zählratensignal zur Gewinnung des Messgrößensignals für die Messgröße zu erzeugen, wobei das Zählratensignal eine Anzahl registrierter Ausgabesignale pro Zeiteinheit ist. Das Zählratensignal beinhaltet die Information über die Messgröße oder Prozessgröße.

In einer Weiterbildung der Erfindung weist der radiometrischer Detektor einen Analog-Digital-Umsetzer auf. Der Analog-Digital-Umsetzer ist dazu ausgebildet, ein jeweiliges Sensorsignal oder das Summensensorsignal oder ein aus dem Summensensorsignal weiterverarbeitetes Signal zu digitalisieren. Insbesondere kann der Analog-Digital-Umsetzer ein Bestandteil der Auswerteeinheit sein. Das weitere Vorgehen erfolgt dann digital in der oben und unten beschriebenen Weise. Bei Digitalisierung des Summensensorsignals mittels des Analog-Digital-Umsetzers kann bei Bedarf der Komparator entfallen. Die Auswerteeinheit, der Analog-Digital-Umsetzer, der Bewertungsteil, der Summationsteil und/oder der Komparator können in Form eines Mikroprozessors und zugehöriger Software realisiert sein.

Des Weiteren kann die Auswerteeinheit vorteilhafterweise ein Umrechnungsteil aufweisen, wobei das Umrechnungsteil dazu ausgebildet ist, das Summensensorsignal oder ein aus dem Summensensorsignal weiterverarbeitetes Signal, wie das Zählratensignal, in das Messgrößensignal für die Messgröße oder Prozessgröße umzurechnen oder umzusetzen. Insbesondere können hierzu Umrechnungs- oder Umsetzfunktionen im Umrechnungsteil hinterlegt sein.

In einer Weiterbildung der Erfindung weist die Auswerteeinheit ein Kompensationsteil auf, wobei das Kompensationsteil mit dem Bewertungsteil in Signalverbindung steht. Das Kompensationsteil ist dazu ausgebildet, bei einer Weiterverarbeitung des Summensensorsignals zur Gewinnung des Messgrößensignals für die Messgröße eine Anzahl von fehlerhaften Sensorsignalen zu kompensieren. Dabei kann das Kompensationsteil vorteilhafterweise dazu ausgebildet sein, eine Gesamtzahl der Mehrzahl von optoelektronischen Sensoren und damit der Sensorsignale zu berücksichtigen. Durch eine Nichtberücksichtigung eines fehlerhaften Sensorsignals fehlt dieses im Summensensorsignal, wodurch ein falsches Messgrößensignal verursacht werden kann. Bei einer bestimmten Anzahl fehlerhafter Sensorsignale und einer bestimmten Anzahl fehlerfreier Sensorsignale kann das Summensensorsignal um einen Faktor Anzahl fehlerfreier Signale / Gesamtzahl der Sensorsignale (Anzahl fehlerhafter Sensorsignale plus Anzahl fehlerfreier Sensorsignale) gegenüber einem zu erwartenden Summensensorsignal bei voll funktionsfähigem Detektor verringert sein. Insbesondere kann die Höhe des Summensensorsignals oder eines aus dem Summensensorsignal weiterverarbeiteten Signals derart niedrig sein, dass die Signalhöhe nicht mehr zum Überschreiten des Messschwellenwerts des Zählers ausreicht. Dadurch verursacht ist das Zählratensignal dann gleich Null. Das Kompensationsteil kompensiert dies vorteilhafterweise.

In einer Ausgestaltung der Erfindung weist das Kompensationsteil einen Verstärker mit einstellbarem Verstärkungsfaktor auf, wobei der Verstärker mit dem Bewertungsteil in Signalverbindung steht. Der Verstärker ist dazu ausgebildet, den Verstärkungsfaktor in Abhängigkeit von einer Anzahl von fehlerfreien Sensorsignalen und der Anzahl von fehlerhaften Sensorsignalen einzustellen. Des Weiteren ist der Verstärker dazu ausgebildet, das Summensensorsignal mit dem Verstärkungsfaktor zur Erzeugung eines verstärkten Summensensorsignals zu verstärken oder den Messschwellenwert mit dem Verstärkungsfaktor abzuschwächen. Somit kann der Verstärker ein fehlerhaftes, bei der Summensensorsignalbildung nichtberücksichtigtes Sensorsignal kompensieren. Bei einer bestimmten Anzahl fehlerhafter Sensorsignale und einer bestimmten Anzahl fehlerfreier Sensorsignale ist der Verstärkungsfaktor zur Verstärkung des Summensensorsignals Gesamtzahl der Sensorsignale / Anzahl fehlerfreier Signale. Dadurch entspricht die Höhe des verstärkten Summensensorsignals einer zu erwartenden Höhe eines Summensensorsignals bei keinem fehlerhaften Sensorsignal im radiometrischen Detektor. Zusätzlich oder alternativ kann der Messschwellenwert des Komparators vorteilhafterweise einstellbar sein. Dann ist der Verstärkungsfaktor zur Abschwächung des Messschwellenwerts Anzahl fehlerfreier Signale / Gesamtzahl der Sensorsignale. Dadurch kann das Summensensorsignal den abgeschwächten Messschwellenwert überschreiten und zur Erzeugung eines Ausgabesignals führen.

In einer Weiterbildung der Erfindung weist der radiometrische Detektor eine Fehlfunktions-Ausgabeeinheit auf. Die Fehlfunktions-Ausgabeeinheit steht mit dem Bewertungsteil in Signalverbindung und ist dazu ausgebildet, ein Fehlfunktions-Signal bei einem fehlerhaften Sensorsignal auszugeben. Mittels des Fehlfunktions-Signals kann ein Fehlverhalten oder ein Ausfall eines einzelnen optoelektronischen Sensors oder eines Szintillators sofort an einen Anwender oder Bediener kommuniziert werden. Somit kann eine Wartung oder Reparatur der betroffenen Komponente stattfinden, bevor weitere Komponenten ausfallen und damit der ganze radiometrische Detektor nicht mehr funktionsfähig ist. Insbesondere kann das Fehlfunktions-Signal die Information beinhalten, welche Komponente fehlerhaft oder ausgefallen ist. Das Fehlfunktions-Signal kann in akustischer Form mittels eines Lautsprechers der Fehlfunktions-Ausgabeeinheit, in optischer Form mittels mindestens einer Warnleuchte der Fehlfunktions-Ausgabeeinheit und/oder in Form einer elektronischen Mitteilung an ein Steuersystem für den radiometrischen Detektor bzw. an eine Leitwarte ausgegeben werden.

Des Weiteren kann der radiometrische Detektor vorteilhafterweise ein Übertragungsteil aufweisen, wobei das Übertragungsteil dazu ausgebildet ist, das Summensensorsignal oder ein aus dem Summensensorsignal weiterverarbeitetes Signal, wie das Zählratensignal oder das Messgrößensignal für die Messgröße oder Prozessgröße an ein externes Gerät, z.B. in einer Leitwarte, zu übertragen. Insbesondere kann es sich bei dem Übertragungsteil um ein Modem oder einen Signalwandler handeln. Zur Übertragung kann ein Bussystem wie HART, Profibus, Modbus oder EROA basierend auf verschiedenen physikalischen Trägern wie 4-20mA, RS485 oder FSK zum Einsatz kommen.

Die jeweiligen Bestandteile der Auswerteeinheit sowie auch das Übertragungsteil und alle hierzu benötigten Komponenten, soweit vorhanden, besitzen ein Ausfallrisiko, das im ungünstigstem Fall zur Übermittelung eines falschen Signals aus dem radiometrischen Detektor z.B. zu einer Leitwarte führen würde.

In einer Weiterbildung der Erfindung weist der radiometrische Detektor einen weiteren optoelektronischen Sensor, ein Vergleichsteil und eine weitere Fehlfunktions-Ausgabeeinheit auf. Der weitere optoelektronische Sensor ist dazu ausgebildet, die von dem Szintillator erzeugten Lichtimpulse in ein zugehöriges weiteres Sensorsignal umzuwandeln. Das Vergleichsteil ist dazu ausgebildet, ein aus dem weiteren Sensorsignal weiterverarbeitetes weiteres Messgrößensignal mit dem Messgrößensignal, insbesondere kontinuierlich, zu vergleichen. Vorteilhafterweise kann das Vergleichsteil mit dem weiteren Messgrößensignal und dem Messgrößensignal beaufschlagt sein. Die weitere Fehlfunktions-Ausgabeeinheit ist dazu ausgebildet, ein Fehlfunktions-Signal in Abhängigkeit von einem Vergleichsergebnis, z.B. bei einer Abweichung des weiteren Messgrößensignals von dem Messgrößensignal, auszugeben. Insbesondere kann die weitere Fehlfunktions-Ausgabeeinheit mit dem Vergleichsteil in Signalverbindung stehen. Insbesondere kann die Auswerteeinheit, die mit den jeweiligen Sensorsignalen der Mehrzahl optoelektronischer Sensoren beaufschlagt ist, nicht mit dem weiteren Sensorsignal des weiteren optoelektronischen Sensors beaufschlagt sein. Stattdessen kann der radiometrische Detektor eine weitere Auswerteeinheit zur Weiterverarbeitung des weiteren Sensorsignals zu dem weiteren Messgrößensignal aufweisen, wobei die weitere Auswerteeinheit mit dem weiteren Sensorsignal des weiteren optoelektronischen Sensors beaufschlagt sein kann. Es kann somit eine getrennte, weitere bzw. komplett eigenständige Signalerzeugung und Signalverarbeitung stattfinden. Dadurch kann das Vergleichsteil einen möglichen Fehler oder Ausfall der jeweiligen Bestandteile der Auswerteeinheit, des Übertragungsteils und/oder aller hierzu benötigten Komponenten, soweit vorhanden, erkennen und mittels der weiteren Fehlfunktions-Ausgabeeinheit das Fehlfunktions-Signal ausgeben, insbesondere an einen Anwender oder Bediener kommunizieren. Insbesondere kann das Fehlfunktions-Signal die Information beinhalten, welches Teil fehlerhaft oder ausgefallen ist. Das Fehlfunktions-Signal kann in akustischer Form mittels eines Lautsprechers der weiteren Fehlfunktions-Ausgabeeinheit, in optischer Form mittels mindestens einer Warnleuchte der weiteren Fehlfunktions-Ausgabeeinheit und/oder in Form einer elektronischen Mitteilung an ein Steuersystem für den radiometrischen Detektor bzw. an eine Leitwarte ausgegeben werden. Des Weiteren kann bei einer Fehlfunktion eine Übertragung des Messgrößensignals von dem radiometrischen Detektor nach außen z.B. durch Öffnen eines Schalters des radiometrischen Detektors unterbrochen werden.

In einer Weiterbildung der Erfindung ist die Messgröße ein Füllstand oder ein Feuchtengehalt oder eine Dichte oder ein Massenstrom.

Vorteilhafte Ausführungsformen der Erfindung sind in den Zeichnungen dargestellt und werden nachfolgend beschrieben: Hierbei zeigen:
- Fig. 1: ein schematisches Blockschaltbild eines erfindungsgemäßen radiometrischen Detektors und
- Fig. 2: ein schematisches Blockschaltbild eines weiteren erfindungsgemäßen radiometrischen Detektors.

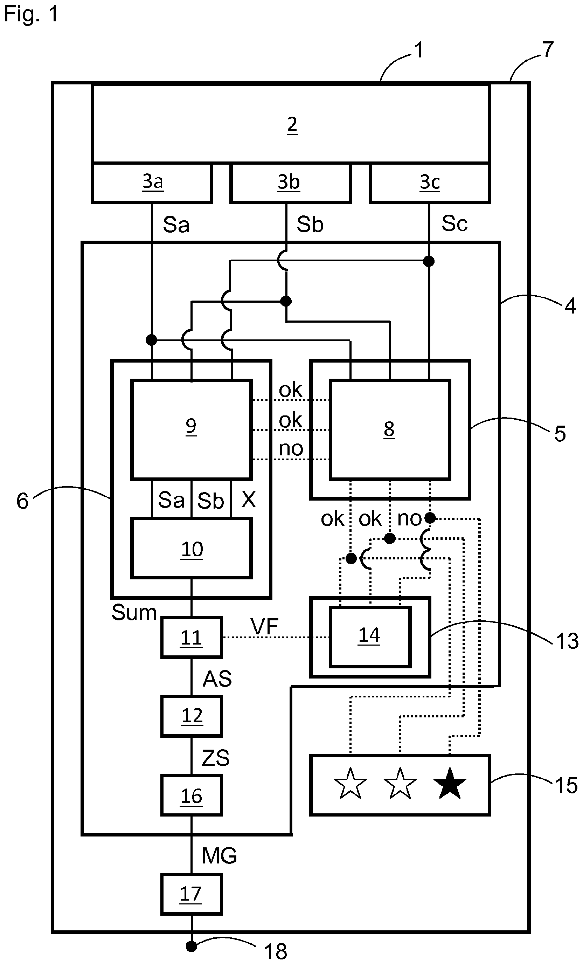

Fig. 1 zeigt einen radiometrischen Detektor 1 mit einem Gehäuse 7. In dem Gehäuse 7 sind ein Szintillator 2, drei optoelektronische Sensoren 3a, 3b, 3c, eine Auswerteeinheit 4 und eine Fehlfunktions-Ausgabeeinheit 15 angeordnet. Die optoelektronischen Sensoren 3a, 3b, 3c sind somit intern redundant ausgeführt. Die optoelektronischen Sensoren 3a, 3b, 3c sind optisch unmittelbar oder mittelbar über mindestens ein weiteres Element an den Szintillator 2 gekoppelt. Im Detail sind sie auf einer Innenseite des Szintillators 2 angebracht.

Beim Einfall von ionisierender Strahlung, wobei die ionisierende Strahlung von einer zu erfassenden oder zu messenden Messgröße abhängt, wird der Szintillator 2 angeregt und gibt die Anregungsenergie in Form von Lichtimpulsen wieder ab. Die optoelektronischen Sensoren 3a, 3b, 3c sind jeweils dazu ausgebildet, die von dem Szintillator 2 erzeugten Lichtimpulse in ein zugehöriges elektrisches Sensorsignal Sa, Sb, Sc umzuwandeln. Dabei sind in der Regel die Sensorsignale Sa, Sb, Sc der optoelektronischen Sensoren 3a, 3b, 3c zeitlich korreliert, da sich das im Szintillator 2 erzeugte Szintillationslicht über alle der optoelektronischen Sensoren 3a, 3b, 3c verteilt. Im vorliegenden Fall soll der optoelektronische Sensor 3c fehlerhaft sein und permanent ein Sensorsignal Sc gleich zwei auszugeben, während die anderen optoelektronischen Sensoren 3a, 3b funktionsfähig sein sollen und nur bei Szintillationslicht die Sensorsignale Sa, Sb mit einem Wert jeweils gleich eins ausgeben sollen.

Die Auswerteeinheit 4 ist mit den Sensorsignalen Sa, Sb, Sc beaufschlagt, wie durch die durchgezogenen Linien in der Fig. 1 angezeigt. Die Auswerteeinheit 4 weist ein Bewertungsteil 5 und ein Summationsteil 6 auf. Das Bewertungsteil 5 ist dazu ausgebildet, ein jeweiliges Sensorsignal Sa, Sb, Sc als fehlerfreies oder fehlerhaftes Sensorsignal zu bewerten. Im Detail weist das Bewertungsteil eine Auswahllogik 8 in Form einer 2003 Auswahllogik auf, wobei die Auswahllogik 8 dazu ausgebildet ist, ein jeweiliges Sensorsignal Sa, Sb, Sc als fehlerfreies oder fehlerhaftes Sensorsignal zu bewerten. Die Auswahllogik ist dazu ausgebildet, die Sensorsignale Sa, Sb, Sc miteinander zu vergleichen und in Abhängigkeit von einem Vergleichsergebnis ein jeweiliges Sensorsignal Sa, Sb, Sc als fehlerfreies oder fehlerhaftes Sensorsignal zu bewerten. Im vorliegenden Fall ist das Sensorsignal Sc gleich zwei und die anderen Sensorsignale Sa, Sb sind jeweils gleich eins. Durch Vergleich der drei Sensorsignale Sa, Sb, Sc miteinander erkennt die Auswahllogik 8, dass das Sensorsignal Sc von den anderen Sensorsignalen Sa, Sb abweicht. Folglich bewertet die Auswahllogik 8 das Sensorsignal Sc als fehlerhaft (no) und die anderen Sensorsignale Sa, Sb als fehlerfrei (ok).

Das Summationsteil 6 ist dazu ausgebildet, ein Summensensorsignal Sum nur aus den fehlerfreien Sensorsignalen Sa, Sb zur Gewinnung eines Messgrößensignals MG für die Messgröße zu bilden. Im Detail weist das Summationsteil 6 ein Schaltelement 9 und ein Summationselement 10 auf. Das Schaltelement 9 steht mit der Auswahllogik 8 des Bewertungsteils 5 in Signalverbindung, wie durch die gepunkteten Linien in der Fig. 1 angezeigt, und ist dazu ausgebildet, ein jeweiliges fehlerfreies Sensorsignal Sa, Sb weiterzuleiten und ein jeweiliges fehlerhaftes Sensorsignal Sc nicht weiterzuleiten. Eine Weiterleitung oder eine Nichtweiterleitung eines jeweiligen Sensorsignals erfolgt durch entsprechende Schaltzustände von Schaltern in dem Schaltelement 9 in Abhängigkeit von der Bewertung des Bewertungsteils 5. Im vorliegenden Fall werden die fehlerfreien Sensorsignale Sa, Sb an das Summationselement 10 weitergeleitet, während das fehlerhafte Sensorsignal Sc nicht an das an das Summationselement 10 weitergeleitet wird. Das fehlerhafte Sensorsignal Sc wird von der Summensensorsignalbildung ausgeblendet.

Das Summationselement 10 ist dazu ausgebildet, das Summensensorsignal Sum aus den von dem Schaltelement 9 weitergeleiteten fehlerfreien Sensorsignalen Sa, Sb zu bilden. Im Detail wird das Summensensorsignal Sum durch Addieren der zeitlich korrelierten analogen Sensorsignale Sa, Sb gebildet; Sum = Sa + Sb. Somit werden die einzelnen Sensorsignale parallel ausgewertet.

Des Weiteren weist die Auswerteeinheit einen Komparator 11 auf. Der Komparator 11 ist dazu ausgebildet, das Summensensorsignal Sum mit einem einstellbaren Messschwellenwert zu vergleichen und in Abhängigkeit von einem Vergleichsergebnis ein Ausgabesignal AS zu erzeugen. Der Komparator 11 analysiert das Summensensorsignal Sum in seiner Höhe. Überschreitet die Signalhöhe den Messschwellenwert, wird das Ausgabesignal AS erzeugt. Standardmäßig kann der Messschwellenwert beispielsweise auf ungefähr 2,4 eingestellt sein. Damit könnte bei drei funktionsfähigen optoelektronischen Sensoren 3a, 3b, 3c mit drei fehlerfreien Sensorsignalen jeweils mit dem Wert eins ein Summensensorsignal gleich drei sein, wodurch dieses den Messschellenwert überschreiten würde. Im vorliegenden Fall ist das Summensensorsignal Sum gleich zwei. Somit würde dieses die standardmäßig eingestellte Messschwelle von 2,4 nicht überschreiten. Dies würde zu einem falschen Messgrößensignal MG führen, da ein durch die Messgröße verursachter oder beeinflusster Lichtimpuls im Szintillator nicht berücksichtigt werden würde.

Jedoch weist die Auswerteeinheit 4 ein Kompensationsteil 13 auf, wobei das Kompensationsteil 13 mit dem Bewertungsteil 5 in Signalverbindung steht, wie durch die gepunkteten Linien in der Fig. 1 angezeigt. Das Kompensationsteil 13 ist dazu ausgebildet, bei einer Weiterverarbeitung des Summensensorsignals Sum zur Gewinnung des Messgrößensignals MG für die Messgröße eine Anzahl von fehlerhaften Sensorsignalen zu kompensieren. Im Detail weist das Kompensationsteil13 einen Verstärker 14 mit einstellbarem Verstärkungsfaktor VF auf, wobei der Verstärker 14 mit dem Bewertungsteil 5 in Signalverbindung steht. Der Verstärker 14 ist dazu ausgebildet, den Verstärkungsfaktor VF in Abhängigkeit von einer Anzahl von fehlerfreien Sensorsignalen und der Anzahl von fehlerhaften Sensorsignalen einzustellen. Des Weiteren steht der Verstärker 14 mit dem Komparator 11 in Signalverbindung und ist dazu ausgebildet, den Messschwellenwert des Komparators 11 mit dem Verstärkungsfaktor VF abzuschwächen. Somit kann der Verstärker 14 ein fehlerhaftes, bei der Summensensorsignalbildung nichtberücksichtigtes Sensorsignal kompensieren. Im vorliegenden Fall ist die Anzahl von fehlerfreien Sensorsignalen zwei, Sa und Sb, und die Anzahl der fehlerhaften Sensorsignale ist eins, Sc. Der Verstärker stellt den Verstärkungsfaktor VF auf 2/3 ein. Somit wird der Messschwellenwert auf 1,6 eingestellt. Dadurch kann das nur aus zwei fehlerfreien Sensorsignalen gebildete Summensensorsignal Sum den abgeschwächten Messschwellenwert überschreiten und führt zur Erzeugung des Ausgabesignals AS.

Die Auswerteeinheit weist einen Zähler 12 auf. Der Zähler 12 ist dazu ausgebildet, das Ausgabesignal AS zu registrieren und ein Zählratensignal ZS zur Gewinnung des Messgrößensignals MG für die Messgröße zu erzeugen, wobei das Zählratensignal ZS eine Anzahl registrierter Ausgabesignale AS pro Zeiteinheit ist.

Darüber hinaus weist die Auswerteeinheit 4 ein Umrechnungsteil 16 auf, wobei das Umrechnungsteil 16 dazu ausgebildet ist, das Zählratensignal ZS in das Messgrößensignal MG für die Messgröße, z.B. ein Füllstand, umzurechnen. Im Umrechnungsteil 16 ist eine Umrechnungsfunktion hinterlegt.

Des Weiteren weist der radiometrische Detektor 1 ein Übertragungsteil 17 in Form eines Modems oder eines Signalwandlers auf, wobei das Übertragungsteil 17 dazu ausgebildet ist, das Messgrößensignal MG an ein externes Gerät 18, z.B. in einer Leitwarte, zu übertragen. Zur Übertragung kann ein Bussystem wie HART, Profibus, Modbus oder EROA basierend auf verschiedenen physikalischen Trägern wie 4-20mA, RS485 oder FSK zum Einsatz kommen.

Der gezeigte radiometrische Detektor 1 kann folglich auch bei einem Ein-Sensoren-Ausfall noch ein zuverlässiges Summensensorsignal Sum bzw. ein zuverlässiges Messgrößensignal MG ermitteln.

Weiter steht die Fehlfunktions-Ausgabeeinheit 15 mit dem Bewertungsteil 5 in Signalverbindung, wie durch die gepunkteten Linien in der Fig. 1 angezeigt, und ist dazu ausgebildet, ein Fehlfunktions-Signal bei einem fehlerhaften Sensorsignal auszugeben. Im Detail ist die Fehlfunktions-Ausgabeeinheit 15 dazu ausgebildet, ein Fehlfunktions-Signal für jeden der optoelektronischen Sensoren 3a, 3b, 3c in optischer Form durch drei Warnleuchten auszugeben. Im vorliegenden Fall gibt die Warnleuchte für den optoelektronischen Sensor 3c ein Fehlfunktions-Signal aus.

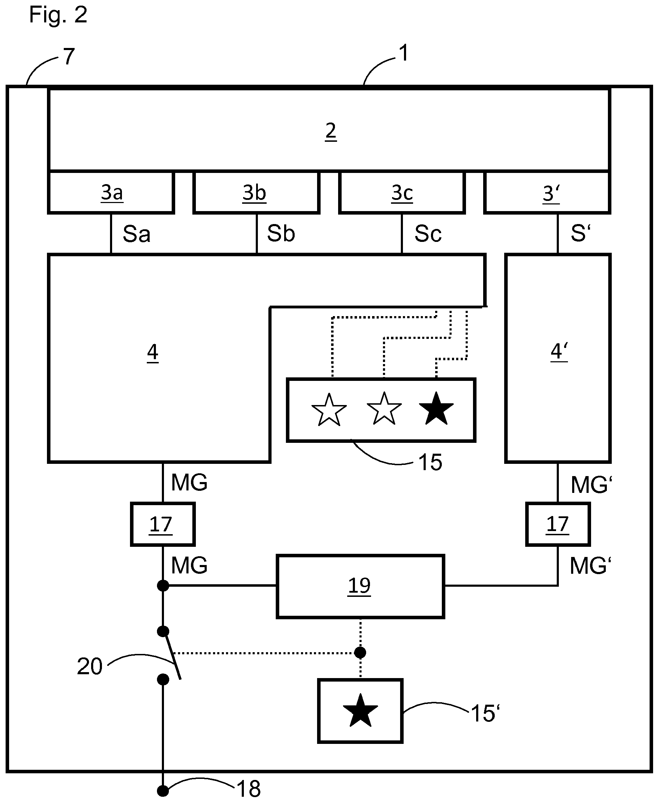

Fig. 2 zeigt eine weitere Ausführungsform für einen weiteren radiometrischen Detektor 1, wobei hier zum leichteren Verständnis nicht nur identische, sondern auch funktionell äquivalente Elemente mit den gleichen Bezugszeichen versehen sind wie zu der oben erläuterten Ausführungsform, auf deren Beschreibung insoweit verwiesen werden kann. Zusätzlich zu dem radiometrischen Detektor 1 der Fig. 1 weist der radiometrische Detektor 1 der Fig. 2 einen weiteren optoelektronischen Sensor 3', ein Vergleichsteil 19 und eine weitere Fehlfunktions-Ausgabeeinheit 15' auf. Der weitere optoelektronische Sensor 3' ist dazu ausgebildet, die von dem Szintillator 2 erzeugten Lichtimpulse in ein zugehöriges weiteres Sensorsignal S' umzuwandeln. Das Vergleichsteil 19 ist dazu ausgebildet, ein aus dem weiteren Sensorsignal S' weiterverarbeitetes weiteres Messgrößensignal MG' mit dem Messgrößensignal MG, insbesondere kontinuierlich, zu vergleichen. Das Vergleichsteil 19 ist mit dem Messgrößensignal MG nach dem Übertragungsteil 17 und dem weiteren Messgrößensignal MG' nach einem weiteren Übertragungsteil 17 beaufschlagt, wie durch die durchgezogenen Linien in der Fig. 2 angezeigt. Im Detail weist der radiometrische Detektor 1 eine weitere Auswerteeinheit 4' zur Weiterverarbeitung des weiteren Sensorsignals S' zu dem weiteren Messgrößensignal MG' auf, wobei die weitere Auswerteeinheit 4' mit dem weiteren Sensorsignal S' des weiteren optoelektronischen Sensors 3' beaufschlagt ist. Somit findet eine getrennte, weitere bzw. komplett eigenständige Signalerzeugung und Signalverarbeitung des Signals S' von den Signalen Sa, Sb und Sc statt. In ihrem Aufbau kann sich die weitere Auswerteeinheit 4' von dem Aufbau der Auswerteeinheit 4 unterscheiden. Die weitere Fehlfunktions-Ausgabeeinheit 15' ist dazu ausgebildet, ein Fehlfunktions-Signal in Abhängigkeit von einem Vergleichsergebnis des Vergleichsteils 19 auszugeben. Die weitere Fehlfunktions-Ausgabeeinheit 15' steht mit dem Vergleichsteil 19 in Signalverbindung, wie durch die gepunkteten Linien in der Fig. 2 angezeigt. Im Detail ist die Fehlfunktions-Ausgabeeinheit 15 dazu ausgebildet, ein Fehlfunktions-Signal in optischer Form durch eine Warnleuchte auszugeben.

Im vorliegenden Fall sei das Umrechnungsteil 16 der Auswerteinheit 4 defekt und das Messgrößensignal MG sei gleich Null, während die weitere Auswerteeinheit 4' und das weitere Übertragungsteil 17 funktionsfähig seien und das weitere Messgrößensignal MG' von Null verschieden sei. Durch Vergleich des Messgrößensignals MG mit dem weiteren Messgrößensignal MG' erkennt das Vergleichsteil 19, dass das Messgrößensignal MG von dem weiteren Messgrößensignal MG' abweicht. Folglich gibt die Warnleuchte der weiteren Fehlfunktions-Ausgabeeinheit 15' ein Fehlfunktions-Signal aus. Des Weiteren weist der radiometrische Detektor 1 einen Schalter 20 auf. Der Schalter 20 steht mit dem Vergleichsteil 19 in Signalverbindung. Bei einer Fehlfunktion, wie sie im Beispiel vorliegen soll, ist der Schalter 20 geöffnet. Dadurch wird eine Übertragung des falschen Messgrößensignals MG von dem radiometrischen Detektor 1 nach außen an das externe Gerät 18 unterbrochen. Ansonsten kann der Schalter 20 geschlossen sein und das Messgrößensignals MG, soweit fehlerfrei und keine Abweichung zu dem weiteren Messgrößensignal MG' vorliegt, nach außen übertragen werden.

In den gezeigten Ausführungsformen weist der radiometrische Detektor drei beziehungsweise vier optoelektronische Sensoren auf. Alternativ kann er zwei oder mehr als drei beziehungsweise vier optoelektronische Sensoren aufweisen.

Des Weiteren weist in den gezeigten Ausführungsformen der radiometrische Detektor einen einzigen Szintillator auf. Alternativ kann der radiometrische Detektor eine Mehrzahl benachbart angeordneter Szintillatoren aufweisen, wobei an jeden Szintillator mindestens ein optoelektronischer Sensor optisch gekoppelt sein kann. Mehrere dieser voneinander unabhängigen Szintillationsmodule können möglichst dicht gepackt in dem Gehäuse des radiometrischen Detektors angeordnet sein. In diesem Fall kann das Summationsteil dazu ausgebildet sein, jeweils Einzelsummensensorsignale nur aus den fehlerfreien analogen Sensorsignalen der einzelnen Szintillationsmodule zu bilden und aus den Einzelsummensensorsignalen oder aus diesen weiterverarbeiteten Signalen ein Summensensorsignal zur Gewinnung eines Messgrößensignals für die Messgröße zu bilden.

Außerdem ist der Verstärker dazu ausgebildet, den Messschwellenwert mit dem Verstärkungsfaktor abzuschwächen. Alternativ kann der Verstärker dazu ausgebildet sein, das Summensensorsignal mit dem Verstärkungsfaktor zur Erzeugung eines verstärkten Summensensorsignals zu verstärken.

In den gezeigten Ausführungsformen seien die jeweiligen Sensorsignale und das Summensensorsignal analoge Signale. Vorteilhafterweise kann der radiometrischer Detektor einen Analog-Digital-Umsetzer aufweisen, wobei der Analog-Digital-Umsetzer dazu ausgebildet sein kann, ein jeweiliges Sensorsignal oder das Summensensorsignal oder ein aus dem Summensensorsignal weiterverarbeitetes Signal zu digitalisieren. Insbesondere kann der Analog-Digital-Umsetzer ein Bestandteil der Auswerteeinheit sein. Das weitere Vorgehen erfolgt dann digital in der oben beschriebenen Weise. Bei Digitalisierung des Summensensorsignals mittels des Analog-Digital-Umsetzers kann bei Bedarf der Komparator entfallen. Die Auswerteeinheit, der Analog-Digital-Umsetzer, der Bewertungsteil, der Summationsteil und/oder der Komparator können in Form eines Mikroprozessors und zugehöriger Software realisiert sein.

Zusätzlich oder alternativ zur Ausgabe eines Fehlfunktions-Signals in optischer Form, kann die Fehlfunktions-Ausgabeeinheit bzw. die weitere Fehlfunktions-Ausgabeeinheit dazu ausgebildet sein, ein Fehlfunktions-Signal in akustischer Form mittels eines Lautsprechers und/oder in Form einer elektronischen Mitteilung an ein Steuersystem für den radiometrischen Detektor auszugeben.

Wie die gezeigten und oben erläuterten Ausführungsformen deutlich machen, stellt die Erfindung einen vorteilhaften radiometrischen Detektor zur Erfassung eine Messgröße zur Verfügung, wobei der Detektor besonders ausfallsicher bei gleichzeitig einfachem, platzsparenden und kostengünstigem Aufbau ist, ohne Einbußen im Signal-Rausch-Verhältnis zu haben.

## Patentansprüche

1. Radiometrischer Detektor (1) zur Erfassung einer Messgröße mit
- einem Szintillator (2) zur Erzeugung von Lichtimpulsen und
- einer Mehrzahl optoelektronischer Sensoren (3a, 3b, 3c), wobei ein jeweiliger optoelektronischer Sensor (3a, 3b, 3c) dazu ausgebildet ist, die von dem Szintillator (2) erzeugten Lichtimpulse in ein zugehöriges Sensorsignal (Sa, Sb, Sc) umzuwandeln, **gekennzeichnet durch**
- eine Auswerteeinheit (4) mit
- einem Bewertungsteil (5), wobei das Bewertungsteil (5) dazu ausgebildet ist, ein jeweiliges Sensorsignal (Sa, Sb, Sc) als fehlerfreies (Sa, Sb) oder fehlerhaftes Sensorsignal (Sc) zu bewerten, und
- einem Summationsteil (6), wobei das Summationsteil (6) dazu ausgebildet ist, ein Summensensorsignal (Sum) nur aus den fehlerfreien Sensorsignalen (Sa, Sb) zur Gewinnung eines Messgrößensignals (MG) für die Messgröße zu bilden.

2. Radiometrischer Detektor (1) nach Anspruch 1, wobei der Szintillator (2), die Mehrzahl optoelektronischer Sensoren (3a, 3b, 3c) und die Auswerteeinheit (4) in einem gemeinsamen Gehäuse (7) angeordnet sind.

3. Radiometrischer Detektor (1) nach Anspruch 1 oder 2, wobei das Bewertungsteil (5) eine Auswahllogik (8) aufweist, wobei die Auswahllogik (8) dazu ausgebildet ist, ein jeweiliges Sensorsignal (Sa, Sb, Sc) als fehlerfreies (Sa, Sb) oder fehlerhaftes Sensorsignal (Sc) zu bewerten.

4. Radiometrischer Detektor (1) nach Anspruch 3, wobei die Mehrzahl optoelektronischer Sensoren (3a, 3b, 3c) mindestens drei optoelektronische Sensoren (3a, 3b, 3c) aufweist und die Auswahllogik (8) dazu ausgebildet ist, die Mehrzahl der Sensorsignale (Sa, Sb, Sc) miteinander zu vergleichen und in Abhängigkeit von einem Vergleichsergebnis ein jeweiliges Sensorsignal (Sa, Sb, Sc) als fehlerfreies (Sa, Sb) oder fehlerhaftes Sensorsignal (Sc) zu bewerten.

5. Radiometrischer Detektor (1) nach einem der Ansprüche 1 bis 4, wobei das Summationsteil (6) aufweist:
- ein Schaltelement (9), wobei das Schaltelement (9) mit dem Bewertungsteil (5) in Signalverbindung steht und das Schaltelement (9) dazu ausgebildet ist, ein jeweiliges fehlerfreies Sensorsignal (Sa, Sb) weiterzuleiten und ein jeweiliges fehlerhaftes Sensorsignal (Sc) nicht weiterzuleiten, und
- ein Summationselement (10), wobei das Summationselement (10) dazu ausgebildet ist, das Summensensorsignal (Sum) aus den von dem Schaltelement (9) weitergeleiteten fehlerfreien Sensorsignalen (Sa, Sb) zu bilden.

6. Radiometrischer Detektor (1) nach einem der Ansprüche 1 bis 5, wobei die Auswerteeinheit (4) aufweist:
- einen Komparator (11), wobei der Komparator (11) dazu ausgebildet ist, das Summensensorsignal (Sum) oder ein aus dem Summensensorsignal weiterverarbeitetes Signal mit einem Messschwellenwert zu vergleichen und in Abhängigkeit von einem Vergleichsergebnis ein Ausgabesignal (AS) zu erzeugen, und
- einen Zähler (12), wobei der Zähler (12) dazu ausgebildet ist, das Ausgabesignal (AS) zu registrieren und ein Zählratensignal (ZS) zur Gewinnung des Messgrößensignals (MG) für die Messgröße zu erzeugen, wobei das Zählratensignal (ZS) eine Anzahl registrierter Ausgabesignale (AS) pro Zeiteinheit ist.

7. Radiometrischer Detektor nach einem der Ansprüche 1 bis 6 mit einem Analog-Digital-Umsetzer, wobei der Analog-Digital-Umsetzer dazu ausgebildet ist, ein jeweiliges Sensorsignal oder das Summensensorsignal oder ein aus dem Summensensorsignal weiterverarbeitetes Signal zu digitalisieren.

8. Radiometrischer Detektor (1) nach einem der Ansprüche 1 bis 7, wobei die Auswerteeinheit (4) ein Kompensationsteil (13) aufweist, wobei das Kompensationsteil (13) mit dem Bewertungsteil (5) in Signalverbindung steht und das Kompensationsteil (13) dazu ausgebildet ist, bei einer Weiterverarbeitung des Summensensorsignals (Sum) zur Gewinnung des Messgrößensignals (MG) für die Messgröße eine Anzahl von fehlerhaften Sensorsignalen (Sb) zu kompensieren.

9. Radiometrischer Detektor (1) nach Anspruch 8, wobei das Kompensationsteil (13) einen Verstärker (14) mit einstellbarem Verstärkungsfaktor (VF) aufweist, wobei der Verstärker (14) mit dem Bewertungsteil (5) in Signalverbindung steht und der Verstärker (14) dazu ausgebildet ist, den Verstärkungsfaktor (VF) in Abhängigkeit von einer Anzahl von fehlerfreien Sensorsignalen (Sa, Sb) und der Anzahl von fehlerhaften Sensorsignalen (Sc) einzustellen, und das Summensensorsignal mit dem Verstärkungsfaktor zur Erzeugung eines verstärkten Summensensorsignals zu verstärken oder den Messschwellenwert mit dem Verstärkungsfaktor (VF) abzuschwächen.

10. Radiometrischer Detektor (1) nach einem der Ansprüche 1 bis 9 mit einer Fehlfunktions-Ausgabeeinheit (15), wobei die Fehlfunktions-Ausgabeeinheit (15) mit dem Bewertungsteil (5) in Signalverbindung steht und die Fehlfunktions-Ausgabeeinheit (15) dazu ausgebildet ist, ein Fehlfunktions-Signal bei einem fehlerhaften Sensorsignal (Sc) auszugeben.

11. Radiometrischer Detektor (1) nach einem der Ansprüche 1 bis 10 mit einem weiteren optoelektronischen Sensor (3'), einem Vergleichsteil (19) und einer weiteren Fehlfunktions-Ausgabeeinheit (15'), wobei der weitere optoelektronische Sensor dazu ausgebildet ist, die von dem Szintillator (2) erzeugten Lichtimpulse in ein zugehöriges weiteres Sensorsignal (S') umzuwandeln, wobei das Vergleichsteil dazu ausgebildet ist, ein aus dem weiteren Sensorsignal weiterverarbeitetes weiteres Messgrößensignal (MG') mit dem Messgrößensignal (MG) zu vergleichen, und wobei die weitere Fehlfunktions-Ausgabeeinheit (15') dazu ausgebildet ist, ein Fehlfunktions-Signal in Abhängigkeit von einem Vergleichsergebnis auszugeben.

12. Radiometrischer Detektor (1) nach einem der Ansprüche 1 bis 11, wobei die Messgröße ein Füllstand oder ein Feuchtegehalt oder eine Dichte oder ein Massenstrom ist.

## Claims

1. Radiometric detector (1) for detecting a measurement variable, comprising
- a scintillator (2) for generating light pulses, and
- a plurality of optoelectronic sensors (3a, 3b, 3c), wherein a respective optoelectronic sensor (3a, 3b, 3c) is embodied to convert the light pulses generated by the scintillator (2) into an associated sensor signal (Sa, Sb, Sc),
**characterized by**
- an evaluation unit (4), comprising
- an assessment part (5), wherein the assessment part (5) is embodied to assess a respective sensor signal (Sa, Sb, Sc) as an error-free (Sa, Sb) or erroneous sensor signal (Sc), and
- a summation part (6), wherein the summation part (6) is embodied to form a summed sensor signal (Sum) only from the error-free sensor signals (Sa, Sb) for the purposes of obtaining a measurement variable signal (MG) for the measurement variable.

2. Radiometric detector (1) according to claim 1, wherein the scintillator (2), the plurality of optoelectronic sensors (3a, 3b, 3c), and the evaluation unit (4) are arranged in a common housing (7).

3. Radiometric detector (1) according to claim 1 or 2, wherein the assessment part (5) comprises a voting logic (8), wherein the voting logic (8) is embodied to assess a respective sensor signal (Sa, Sb, Sc) as an error-free (Sa, Sb) or erroneous sensor signal (Sc).

4. Radiometric detector (1) according to claim 3, wherein the plurality of optoelectronic sensors (3a, 3b, 3c) comprises at least three optoelectronic sensors (3a, 3b, 3c) and the voting logic (8) is embodied to compare the plurality of sensor signals (Sa, Sb, Sc) to one another and to assess a respective sensor signal (Sa, Sb, Sc) as an error-free (Sa, Sb) or erroneous sensor signal (Sc) depending on a comparison result.

5. Radiometric detector (1) according to any of the claims 1 to 4, wherein the summation part (6) comprises:
- a switching element (9), wherein the switching element (9) has a signal connection with the assessment part (5) and the switching element (9) is embodied to forward a respective error-free sensor signal (Sa, Sb) and not to forward a respective erroneous sensor signal (Sc), and
- a summation element (10), wherein the summation element (10) is embodied to form the summed sensor signal (Sum) from the error-free sensor signals (Sa, Sb) forwarded by the switching element (9).

6. Radiometric detector (1) according to any of the claims 1 to 5, wherein the evaluation unit (4) comprises:
- a comparator (11), wherein the comparator (11) is embodied to compare the summed sensor signal (Sum), or a signal formed by further processing of the summed sensor signal, with a measurement threshold and to generate an output signal (AS) depending on a comparison result, and
- a counter (12), wherein the counter (12) is embodied to register the output signal (AS) and to generate a count rate signal (ZS) for the purposes of obtaining the measurement variable signal (MG) for the measurement variable, wherein the count rate signal (ZS) is a number of registered output signals (AS) per unit time.

7. Radiometric detector according to any of the claims 1 to 6, comprising an analogue-to-digital converter, wherein the analogue-to-digital converter is embodied to digitize a respective sensor signal or the summed sensor signal or a signal formed by further processing of the summed sensor signal.

8. Radiometric detector (1) according to any of the claims 1 to 7, wherein the evaluation unit (4) comprises a compensation part (13), wherein the compensation part (13) has a signal connection with the assessment part (5) and the compensation part (13) is embodied to compensate a number of erroneous sensor signals (Sb) during further processing of the summed sensor signal (Sum) for the purposes of obtaining the measurement variable signal (MG) for the measurement variable.

9. Radiometric detector (1) according to claim 8, wherein the compensation part (13) comprises an amplifier (14) having an adjustable gain factor (VF), wherein the amplifier (14) has a signal connection with the assessment part (5) and the amplifier (14) is embodied to set the gain factor (VF) in a manner dependent on a number of error-free sensor signals (Sa, Sb) and the number of erroneous sensor signals (Sc) and to amplify the summed sensor signal with the gain factor for generating an amplified summed sensor signal or to attenuate the measurement threshold by the gain factor (VF).

10. Radiometric detector (1) according to any of the claims 1 to 9 comprising a malfunction output unit (15), wherein the malfunction output unit (15) has a signal connection with the assessment part (5) and the malfunction output unit (15) is embodied to output a malfunction signal in the case of an erroneous sensor signal (Sc).

11. Radiometric detector (1) according to any of the claims 1 to 10 comprising a further optoelectronic sensor (3'), a comparison part (19) and a further malfunction output unit (15'), wherein the further optoelectronic sensor is embodied to convert the light pulses generated by the scintillator (2) into an associated further sensor signal (S'), wherein the comparison part is embodied to compare a further measurement variable signal (MG') formed by further processing of the further sensor signal with the measurement variable signal (MG), and wherein the further malfunction output unit (15') is embodied to output a malfunction signal depending on a comparison result.

12. Radiometric detector (1) according to any of the claims 1 to 11, wherein the measurement variable is a filling level or a moisture content or a density or a mass flow.

## Revendications

1. Détecteur radiométrique (1) destiné à l'acquisition d'une grandeur de mesure, comprenant
- un scintillateur (2) destiné à générer des impulsions lumineuses, et
- une pluralité de capteurs optoélectroniques (3a, 3b, 3c),
dans lequel un capteur optoélectronique respectif (3a, 3b, 3c) est conçu pour convertir les impulsions lumineuses générées par le scintillateur (2) en un signal de capteur associé (Sa, Sb, Sc),
**caractérisé par**
- une unité d'évaluation (4) comprenant
- une partie d'évaluation (5), dans lequel la partie d'évaluation (5) est conçue pour évaluer un signal de capteur respectif (Sa, Sb, Sc) comme étant un signal de capteur non erroné (Sa, Sb) ou erroné (Sc), et
- une partie de sommation (6), dans lequel la partie de sommation (6) est conçue pour créer un signal de capteur de somme (Sum) uniquement à partir des signaux de capteur non erronés (Sa, Sb) afin d'obtenir un signal de grandeur de mesure (MG) pour la grandeur de mesure.

2. Détecteur radiométrique (1) selon la revendication 1, dans lequel le scintillateur (2), la pluralité de capteurs optoélectroniques (3a, 3b, 3c) et l'unité d'évaluation (4) sont disposés dans un boîtier commun (7).

3. Détecteur radiométrique (1) selon la revendication 1 ou 2, dans lequel la partie d'évaluation (5) comporte une logique de sélection (8), dans lequel la logique de sélection (8) est conçue pour évaluer un signal de capteur respectif (Sa, Sb, Sc) comme étant un signal de capteur non erroné (Sa, Sb) ou erroné (Sc).

4. Détecteur radiométrique (1) selon la revendication 3, dans lequel la pluralité de capteurs optoélectroniques (3a, 3b, 3c) comporte au moins trois capteurs optoélectroniques (3a, 3b, 3c) et la logique de sélection (8) est conçue pour comparer les uns aux autres la pluralité de signaux de capteur (Sa, Sb, Sc) et pour évaluer un signal de capteur respectif (Sa, Sb, Sc) comme étant un signal de capteur non erroné (Sa, Sb) ou erroné (Sc) en fonction d'un résultat de comparaison.

5. Détecteur radiométrique (1) selon l'une des revendications 1 à 4, dans lequel la partie de sommation (6) comporte :
- un élément de commutation (9), dans lequel l'élément de commutation (9) est en liaison de signal avec la partie d'évaluation (5) et l'élément de commutation (9) est conçu pour transmettre un signal de capteur non erroné respectif (Sa, Sb) et pour ne pas transmettre de signal de capteur erroné respectif (Sc), et
- un élément de sommation (10), dans lequel l'élément de sommation (10) est conçu pour créer le signal de capteur de somme (Sum) à partir des signaux de capteur non erronés (Sa, Sb) transmis par l'élément de commutation (9).

6. Détecteur radiométrique (1) selon l'une des revendications 1 à 5, dans lequel l'unité d'évaluation (4) comprend :
- un comparateur (11), dans lequel le comparateur (11) est conçu pour comparer le signal de capteur de somme (Sum) ou un signal post-traité à partir du signal de capteur de somme à une valeur de seuil de mesure et pour générer un signal de sortie (AS) en fonction d'un résultat de comparaison, et
- un compteur (12), dans lequel le compteur (12) est conçu pour enregistrer le signal de sortie (AS) et pour générer un signal de taux de comptage (ZS) afin d'obtenir le signal de grandeur de mesure (MG) pour la grandeur de mesure, dans lequel le signal de taux de comptage (ZS) est un nombre de signaux de sortie (AS) enregistrés par unité de temps.

7. Détecteur radiométrique selon l'une des revendications 1 à 6, comprenant un convertisseur analogique-numérique, dans lequel le convertisseur analogique-numérique est conçu pour numériser un signal de capteur respectif ou le signal de capteur de somme ou un signal post-traité à partir du signal de capteur de somme.

8. Détecteur radiométrique (1) selon l'une des revendications 1 à 7, dans lequel l'unité d'évaluation (4) comporte une partie de compensation (13), dans lequel la partie de compensation (13) est en liaison de signal avec la partie d'évaluation (5) et la partie de compensation (13) est conçue pour compenser un nombre de signaux de capteur erronés (Sb) lors du post-traitement du signal de capteur de somme (Sum) afin d'obtenir le signal de grandeur de mesure (MG) pour la grandeur de mesure.

9. Détecteur radiométrique (1) selon la revendication 8, dans lequel la partie de compensation (13) comprend un amplificateur (14) ayant un facteur d'amplification réglable (VF), dans lequel l'amplificateur (14) est en liaison de signal avec la partie d'évaluation (5) et l'amplificateur (14) est conçu pour ajuster le facteur d'amplification (VF) en fonction d'un nombre de signaux de capteur non erronés (Sa, Sb) et du nombre de signaux de capteur erronés (Sc) et pour amplifier le signal de capteur de somme avec ledit facteur d'amplification afin de produire un signal de capteur de somme amplifié ou d'atténuer la valeur de seuil de mesure avec le facteur d'amplification (VF).

10. Détecteur radiométrique (1) selon l'une des revendications 1 à 9, comprenant une unité de sortie de fonction d'erreur (15), dans lequel l'unité de sortie de fonction d'erreur (15) est en liaison de signal avec la partie d'évaluation (5) et l'unité de sortie de fonction d'erreur (15) est conçue pour délivrer un signal de fonction d'erreur dans le cas d'un signal de capteur erroné (Sc).

11. Détecteur radiométrique (1) selon l'une des revendications 1 à 10, comprenant un autre capteur optoélectronique (3'), une partie de comparaison (19) et une autre unité de sortie de fonction d'erreur (15'), dans lequel l'autre capteur optoélectronique est conçu pour convertir les impulsions lumineuses générées par le scintillateur (2) en un autre signal de capteur associé (S'), dans lequel la partie de comparaison est conçue pour comparer un autre signal de grandeur de mesure (MG') post-traité à partir du signal de l'autre capteur au signal de grandeur de mesure (MG), et dans lequel l'autre unité de sortie de fonction d'erreur (15') est conçue pour délivrer un signal d'erreur en fonction d'un résultat de comparaison.

12. Détecteur radiométrique (1) selon l'une des revendications 1 à 11, dans lequel la grandeur de mesure est un niveau de remplissage ou une teneur en humidité ou une densité ou un débit massique.
